Europäisches Patentamt

European Patent Office

Office européen des brevets

(11) Publication number: **0 169 730**
A1

# EUROPEAN PATENT APPLICATION

(21) Application number: 85305239.7

(22) Date of filing: 23.07.85

(51) Int. Cl.⁴: **B 64 C 1/00**
B 64 C 21/00, F 15 D 1/00
F 01 D 5/14, E 04 B 1/98
E 04 H 12/00

(30) Priority: 27.07.84 GB 8419158

(43) Date of publication of application:
29.01.86 Bulletin 86/5

(84) Designated Contracting States:
DE FR GB IT

(71) Applicant: The Secretary of State for Defence in Her
Britannic Majesty's Government of The United Kingdom
of Great Britain and
Northern Ireland Whitehall
London SW1A 2HB(GB)

(72) Inventor: Mabey, Dennis George
20 Manor Close
Bromham Bedfordshire(GB)

(74) Representative: Beckham, Robert William et al,
Procurement Executive Ministry of Defence Patents
1A(4), Room 2014
Empress State Building Lillie Road London SW6 1TR(GB)

(54) Improvements in or relating to fluid excitation alleviation.

(57) On a body constructed for immersion in a fluid flow, a breather (50) connected between orifices on the body surface where time mean pressures are similar while time dependent pressures are substantially 180° out of phase.

EP 0 169 730 A1

Croydon Printing Company Ltd

1

# IMPROVEMENTS IN OR RELATING TO FLUID EXCITATION ALLEVIATION

The present invention relates to the alleviation of the level of fluid buffet excitation. In particular it is concerned with minimising the effect of airflow buffet on aircraft surfaces and on vehicles and buildings such as chimneys and cooling, and other towers. However it is also applicable to waterborne craft including oil rigs. For ease of expression such aircraft surfaces, vehicles, buildings and craft are hereinafter called bodies.

According to the present invention a body liable to buffet excitation from fluid flow incorporates a breather tube connected between orifices on the surface of the body where time mean pressures are similar while time dependent measures would but for their presence be substantially 180° out of phase.

The breather tube may connect two orifices each on opposite sides of the body, and preferably the tube is straight. The orifice effective diameter may be between 1 mm – 10 cm, dependent on the form, type and size of the body and the nature and severity of the buffet to be encountered. The orifice, or orifices may be round.

In one example of a bluff fairing in accordance with the invention a low frequency shock oscillation, observed as heavy buffeting at about 2–3 Hz in flight at transonic speeds, was simulated with a 1/8 scale wind tunnel model at a frequency of 21 Hz. In the tunnel the buffet was strongly attenuated by opening four "buffet breathers" - connections in accordance with the invention - close to the mean shock position.

In a second example, violent, high frequency, oscillation on a 14% thick biconvex symmetrical aerofoil and zero incidence, was eliminated when interconnecting slots of width 0.01 chord were placed at $x/_c$=0.6.

At least in the aircraft context it is preferred that the breather tube be stoppable at the orifices for all non-buffet conditions. Traps which may be slid open or open into the tubes may be arranged to effect breather tube stopping. Moreover a sensor may be deployed for sensing the onset of buffet and effecting trap opening and closure. It should nevertheless be noted that breather tubes in accordance with the invention are less likely to be incorporated between upper and lower surfaces of such lifting aerofoils as aircraft mainplanes and tailplanes, for fear of lift decrement and drag, than they are in various fairing situations. That said however, a tube may be of value between port and starboard upper surfaces of a slender delta aircraft or weapon, for use in regimes where vortices are shed from alternate sides. Moreover they may be of value as perforations at the trailing edge of any aerofoil, including a lifting aerofoil. Again a breathing tube may be established between similar locations on either side of a fuselage nose, particularly a sharp nose, to alleviate assymetric vortices and sideforces generated thereby at high angels of incidence. In this case the orifices may be on a nose cone rotatable to maintain a symmetrical hole configuration with respect to the incidence plane.

The diameter of the tube and orifices necessary to achieve attenuation depends upon the required tube length, the likely severity of the buffet and buffet frequency, and may be determined from the NLR Report 238 of 1965 by H Bergh and H Tijdeman. For reasons of mass reduction the smallest possible tube is likely to be preferred.

Clearly also it will be preferred to minimise the number of breathers in a given extent of surface. In the context of a cylinder subject to flows of varying direction, breathers spaced spanwise at half cylinder diameter intervals, with adjacent breathers at 90° one to another, have been found adequate. As for bodies with considerable chord, on an aerofoil fairing, the breathers are preferably in the region of t/c max and may not need repeating in the chord direction, while on a slender delta wing the primary breather tube may be as close to the nose as possible and a repeater sited wherever vortex regeneration is likely.

Various embodiments of the invention will now be described by way of example with reference to the accompanying drawings, of which:

Figure 1 (a), (b), (c), (d) illustrate a bluff fairing and various breather tube configurations,.

Figures 1 (e), (f) are graphs of main pressures and rms pressure fluctuations on the bluff fairing,

Figure 1(g) is a graph of low frequency excitation on the bluff fairing,

Figures 2 (a), (b) illustrate scale effect configurations in the bluff fairing,

Figures 2 (c), (d) are graphs of mean pressures and rms pressure fluctuations in respect of the Figure 2 configurations,

Figures 3 (a), (b) illustrate a downstream hole breather configuration in the bluff fairing.

Figures 3 (c), (d) are graphs of mean pressures and rms pressure fluctuations in respect of the Figure 3 configurations,

Figure 3 (e) is a graph of low frequency excitation level in respect of the Figure 3 configurations,

4

Figures 4 (a), (b) illustrate different pressure transducer configurations on the bluff fairing,

Figures 4 (c), (d) are graphs of mean pressures and rms pressure fluctuations in respect of the Figure 4 configurations.

Figure 5 illustrates breathers in a cylinder context,

Figure 6 (a)-(e) illustrate breathers in various aircraft contexts, and

Figures 7 (a)-(d) illustrate breathers in various aircraft engine contexts.

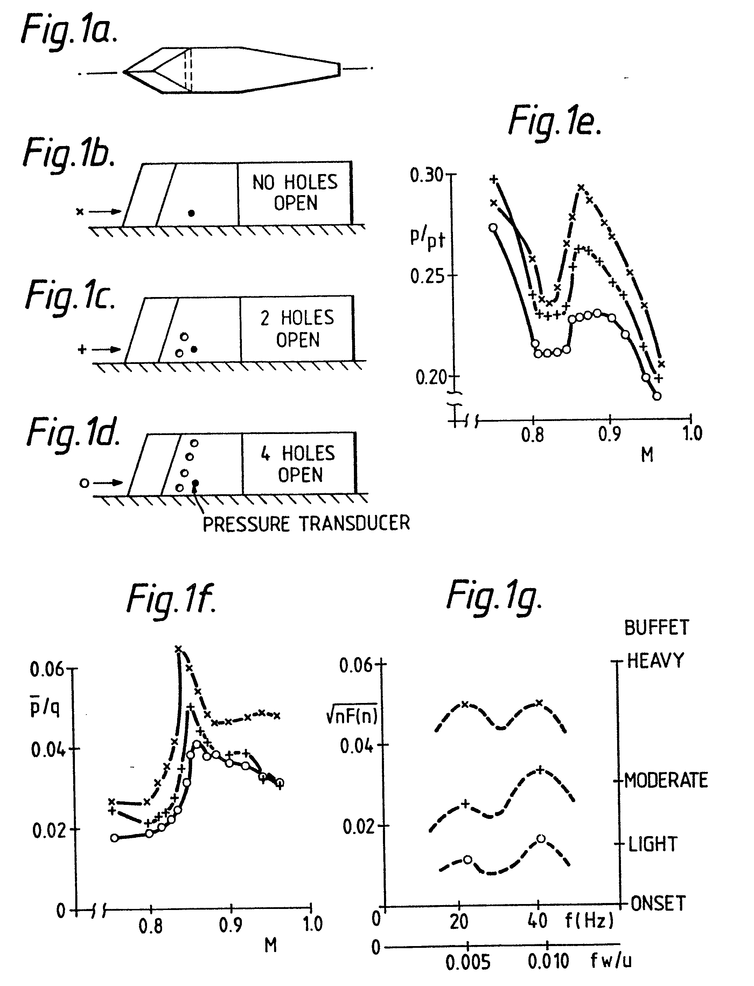

Figures 1-4 illustrate tests carried out on a 1/8.4 scale idealised model of a bluff fairing, somewhat resembling a bath-tub, flown on the front of an aircraft.

Figure 1 is a plan view of the fairing, and Figures 1 (b), (c), (d) are side elevations showing the location of breather orifices 10, of which corresponding orifices on each side are connected by tubes 11. A pressure transducer 12 is sited aft of a station between the two inboard mast holes.

The severe curvature at the shoulder of the fairing produces local mean pressure much lower than the sonic condition ($p/_{pt}$=0.528) at quite low speeds (Figure 1 (e)). At a free stream Mach number M=0.81, the local pressure stops falling, and suddenly increases as Mach number increases. This increase in pressure corresponds to the onset of severe local flow separation at the measurement point (due to an upstream movement of separation), and to buffet onset. By about M=0.86 the pressure starts to fall again (due to a downstream movement of separation) and at this point the effects of shock induced separation are most severe. A rough measure of the severity of flow separation is the increase in $p/_{pt}$ from M=0.81 to 0.86. This increase is halved by opening only two breathers immediately upstream of the transducer 12 and halved again by opening another two breathers remote from the transducer. Hence some alleviation of buffet is suggested by the steady measurements.

The corresponding total broad band rms pressure fluctuations (see Figure 1(f) show a sudden increase from M=0.81 to peak at M=0.85, and then fall again as the supersonic region slowly expands round the shoulder.

The changes in the level of excitation, $\sqrt{nF(n)}$, at low frequency (see Figure 1(g)) are more important for the freight buffeting problem and are much larger than the changes in total rms pressure fluctuations. With no breathers open the buffet intensity approaches

$$\sqrt{nF(n)} = 0.06,$$

the level found at the reattachment point of a bubble and recognised as an upper limit of excitation (in the absence of resonances or special periodic flows). The frequency parameter fW/U is low and corresponds with 21 and 41 Hz. The 21 Hz frequency on an 1/3.4 model corresponds quite well with the test pilots estimate of 2.2 Hz in flight. With two breathers open upstream of the bubble the level falls to about $\sqrt{nF(n)} = 0.03$. With the addition of the two remote breathers open the level falls to about $\sqrt{nF(n)} = 0.015$. Hence there is a large progressive change in the low level excitation; as the breathers are opened.

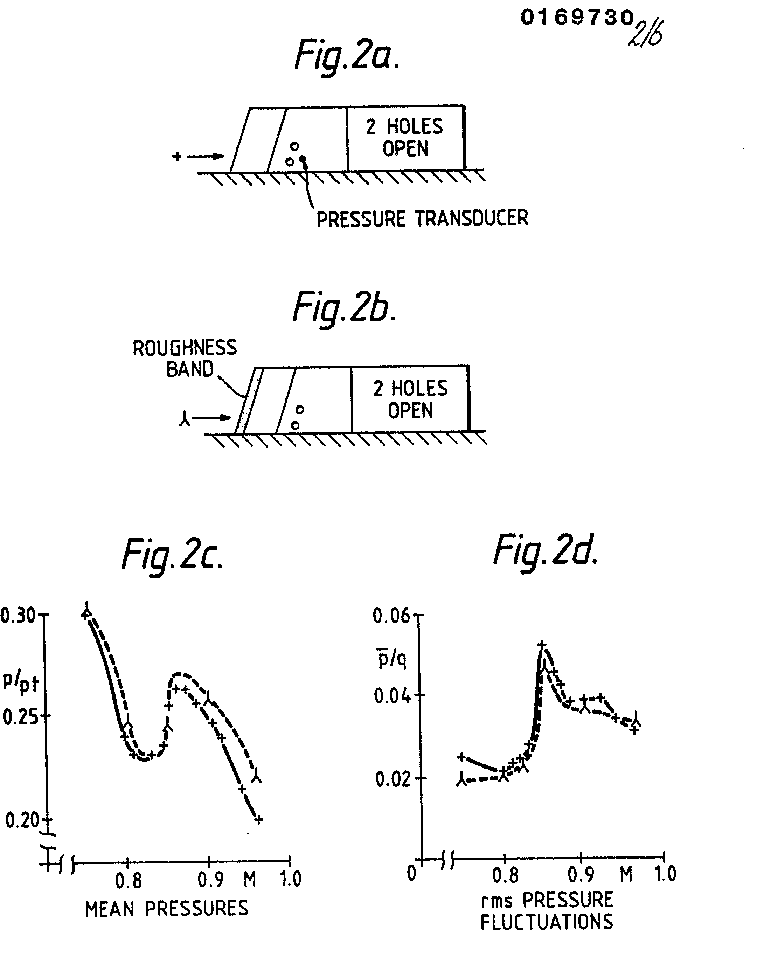

Increasing the boundary layer thickness by wrapping carborundum paper round the leading edge (Fig 2 (a), (b)) makes a small improvement in the mean pressure, (Fig 2(c)) and the rms pressure fluctuations (Fig 2(d)).

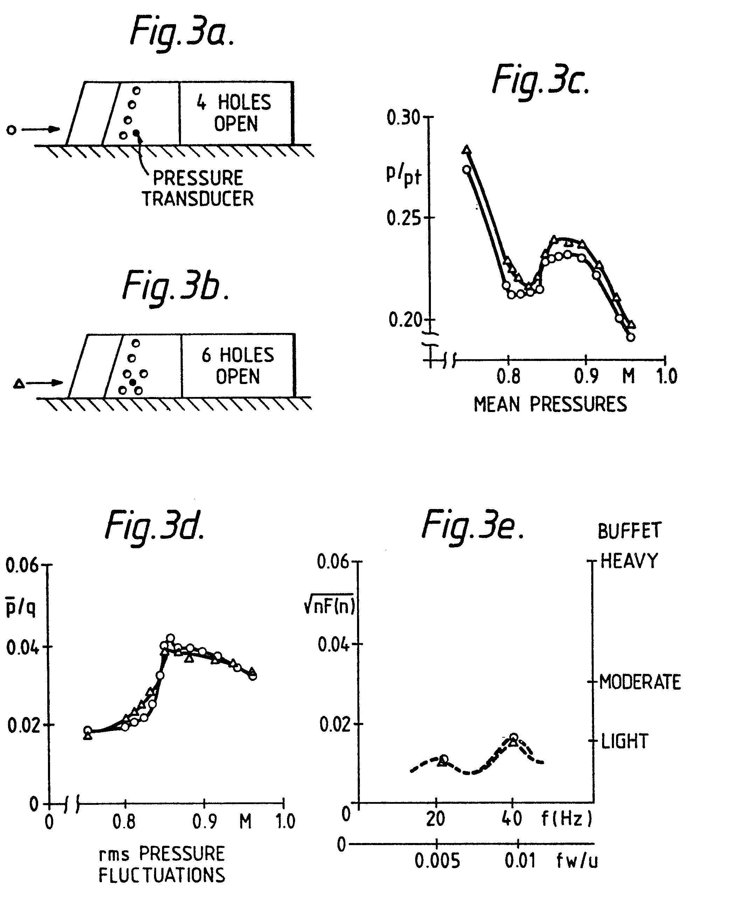

Operating two breathers downstream of the transducer, and therefore away from the separation point, see Figure 3, produces little further improvement in the mean pressures (Fig 3(c)), and no change in the rms pressure fluctuations (Fig 3(d)) or the low frequency excitation (Fig 3(e)).

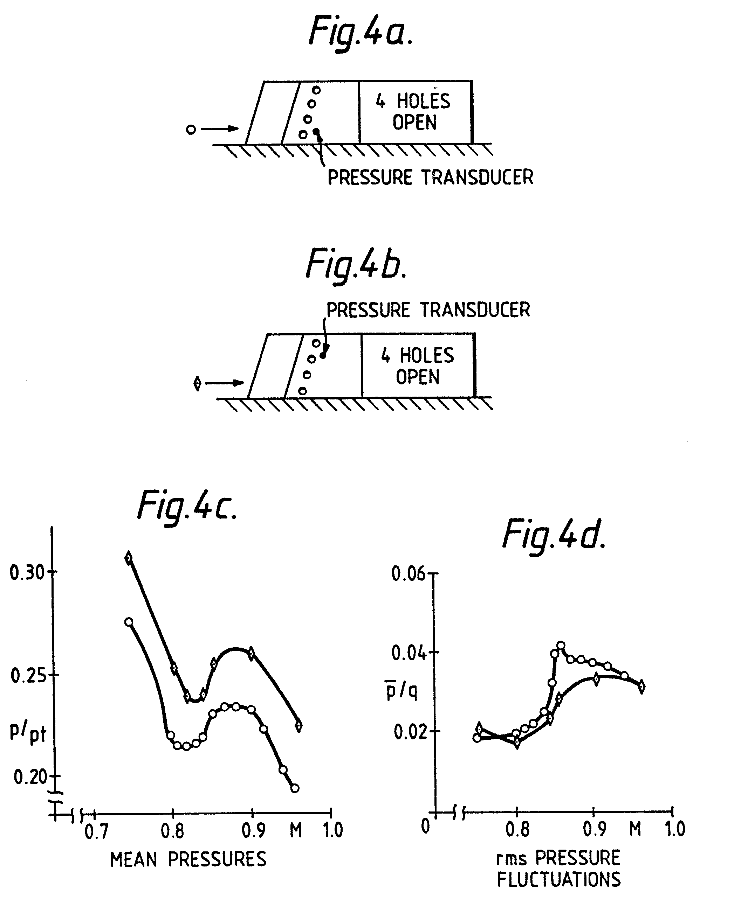

Figure 4 shows that these results are not peculiar to the single transducer position considered, which is close to the fuselage to accentuate shock boundary layer interaction effects. When the pressure transducer is displaced along the shoulder away from the fuselage (Fig 4 (a), (b)) the mean pressure is increased (lower supervelocities) and the severity of the rms pressure fluctuations is decreased. Hence the choice of a transducer position close to the fuselage for the main series of tests was justified.

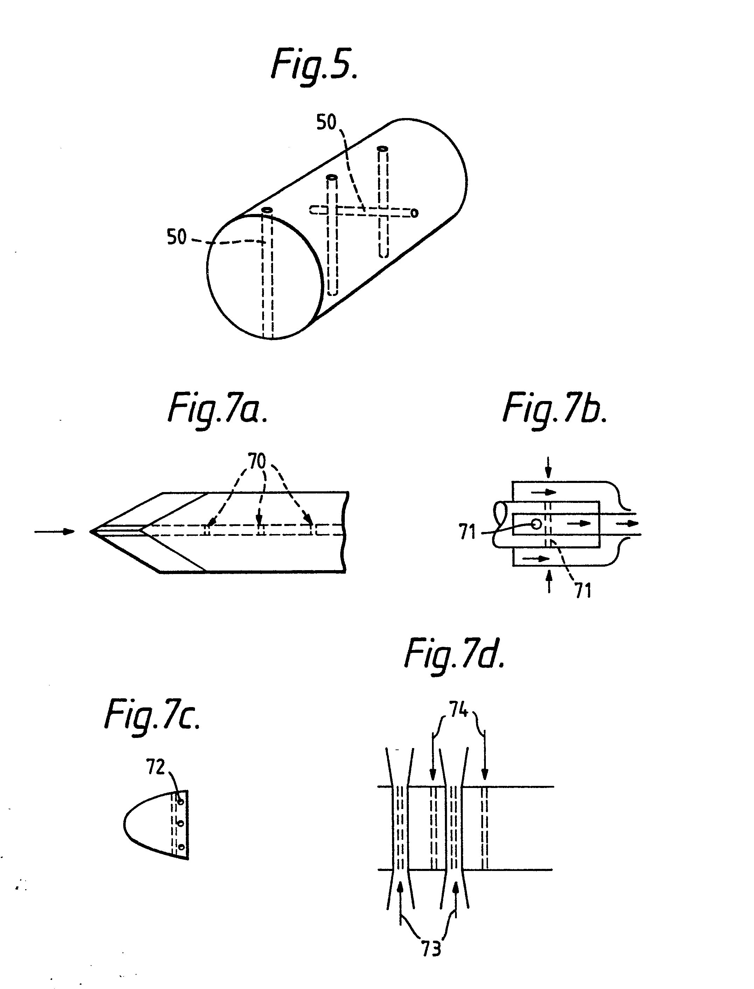

The right circular cylinder illustated in Figure 5 is a construction which, whether taking the form of a water tower, cooling tower, communications tower, strut or submarine periscope or oil rig underwater member, may be liable to excitation in fluid flow by the shedding of Karman vortices. Alternate buffet breather tubes 50 at 90° intervals (to allow for varying fluid flow direction) and spaced at 0.5 d locations spanwise, serve to attenuate the discrete vortex shedding and also to reduce drag.

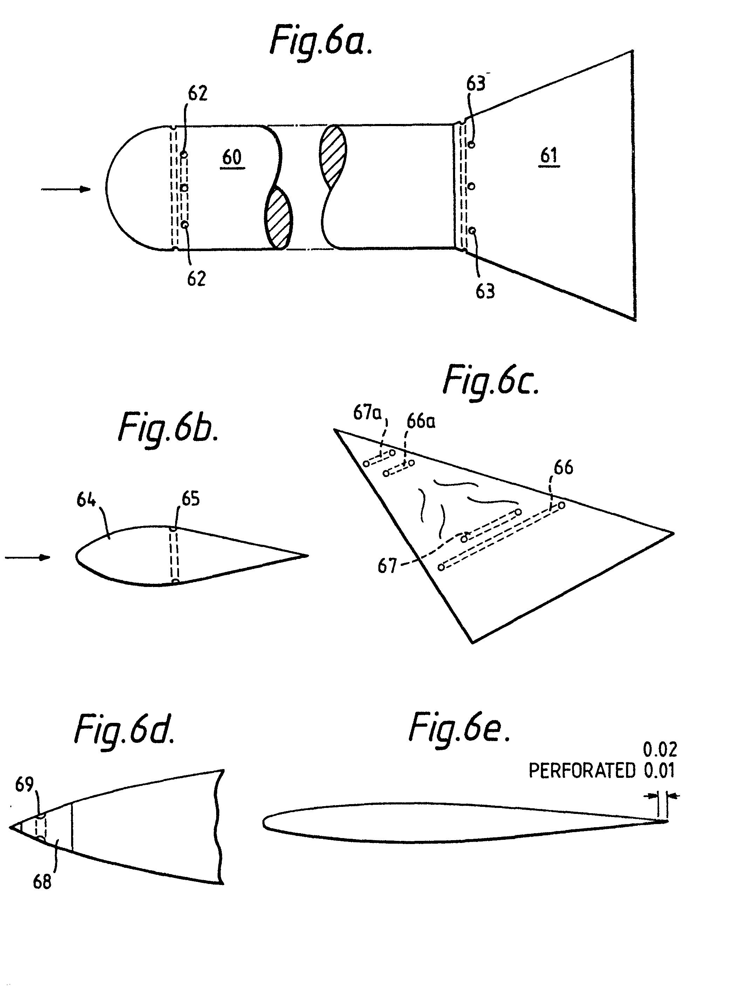

Figure 6 (a) illustrates a re-entry body having a bluff nose 60 and a flared tail 61. This configuration, necessary for the minimisation of heat transfer, is liable to violent buffet excitation at transonic speeds.

Breathers 62 are shown provided through the nose, at the base thereof, to attenuate these unsteady pressures. Sometimes the flows over the flare will separate and become unsteady, giving rise to a loss of stability. Some improvement is obtained by locating breathers 63 at the base of the flare.

Figure 6(b) illustrates a fairing 64 having a breather tube 65 between orifices a corresponding locations on either side, just aft of t/c max.

Figure 6(c) illustrates the use of breathers in a slender wing aircraft configuration. Slender wing aircraft develop wing rocking in symmetric flight ($\beta=0°$) well below vortex breakdown because of alternate vortex shedding from the port and starboard wing upper surfaces, analogous to, and related with, the vortex shedding dicussed above. Buffet breathers 66,67 extending between corresponding upper surface orifices port and starboard serve to attenuate this vortex shedding. Separate buffet breathers are provided for the primary (66) and secondary (67) vortices. The breathers 66a, 67a closest to the apex will be most effective for two reasons:

1.    the time-dependent vortices are initiated in this region,

and 2.    the breathers are extremely short.

The breathers 67 between the pair of secondary vortices may not needed, if the primary vortices are steady. The strength of the mean vortex flow should be increased by the suppression of time-dependent separated flow vortices, with a consequent small increase in lift coefficient for a given angle of incidence. For these reasons and also to avoid collecting rain etc, the breathers 66,67 have traps (not shown) at the orifice, openable into the breathers.

For the case of a short nosed fuselage likely to fly at an incidence greater than half the included nose angle, Figure 6(d) illustrates such a nose having a nose cone 68 with a breather 69 passing between two orifices 1 mm diameter, 60° apart and 5 mm from the nose, the cone being rotatable to maintain the orifices each 120° from bdc about incidence plane.

Figure 6(e) illustrates a wing which is 0.02% perforated over the trailing 0.01 chord, to alleviate aerodynamic trailing edge separated flow noise.

Turning now to engines, many engine installations incorporate streamlined fairings, for structural reasons or for instrumentation (eg jet pipe temperature probes). These fairings generally operate at zero mean incidence in an unsteady flow field and generate significant aerodynamic noise. The arrangement illustrated in Figure 6(b) will attenuate this. The breather 65 in such an instance is a narrow slot close to the maximum thickness.

Many engine problems have been experienced with unsteady flows on bi-furcated intakes (eg on twin-jet fighter aircraft, Figure 7(a)) or multiple intakes for guided weapons

8                          0169730

(Figure 7(b)). Both of these problems can be alleviated by suitably located buffet breathers 70,71.

Again the performance of some compressor designs is limited at certain conditions by rotating stall. [This is an area of separated, or low total pressure, flow which moves slowly round the compressor relative to the axis of rotation.] This can be attenuated either by short breathers 72 on the rotor nose cone or short axis (probably relatively easily mechanically (Figure 2(d)) or with more difficulty between opposite sides of the stages (73) at the root of the blades or between stages (74).

1

CLAIMS

1. A body constructed for immersion in a fluid flow and characterised by a breather tube connected between orifices on the body surface where time mean pressures are similar and time dependent pressures are substantially 180° out of phase.

2. A body as claimed in claim 1 and wherein the breather tube is straight.

3. The body as claimed in claim 1 or claim 2 and having means for stopping the breather tube in non-buffet conditions.

4. A body as claimed in Claim 3 and having a buffet sensor for controlling the stopping means.

5. A body as claimed in any one of the preceding claims and which is a fuselage having a substantially sharp conical nose and wherein the breather tube extends between opposite sides of the plane of incidence.

6. The body as claimed in claim 5 having a rotatable nose cone carrying the breather tube.

7. A body as claimed in any one of claims 1 to 4 and which is substantially cylindrical and has breather tubes at intervals therealong.

8. A body as claimed in claim 7 and wherein adjacent breather tubes are at right angles one to another.

9. A body as claimed in claim 7 or claim 8 and wherein the breather tubes are spaced along the cylinder at half cylinder diameter intervals.

10. A body, as claimed in any one of claim 7 to 9 and which is an oil rig underwater supports member.

11. A body as claimed in any one of claims 1 to 8, and which is an aerofoil fairing and having a breather tube approximate t/c max.

12.  A body as claimed in any one of claims 1 to 4 and which is a slender delta wing and wherein the breather tube extends between similar locations on the port and starboard upper surfaces.

13.  A body as claimed in any one of claims 1 to 4 and which is a re-entry body with a bluff nose and at least one breather tube at the base of the nose.

14.  A body as claimed in any one of claims 1 to 4 and which is a re-entry body with a flared tail and at least one breather tube at the base of the flare.

15.  A body as claimed in any one of claims 1 to 4 and which is a gas turbine engine bifurcated intake.

16.  A body as claimed in any one of claims 1 to 4 and which is a gas turbine engine compressor nose cone.

17.  A body as claimed in any one of claims 1 to 4 and which is a gas turbine engine compressor shaft.

0169730 1/6

Fig.1a.

Fig.1b. NO HOLES OPEN

Fig.1c. 2 HOLES OPEN

Fig.1d. 4 HOLES OPEN

PRESSURE TRANSDUCER

Fig.1e.

Fig.1f.

Fig.1g.

0169730
2/6

Fig.2a.

PRESSURE TRANSDUCER

2 HOLES OPEN

Fig.2b.

ROUGHNESS BAND

2 HOLES OPEN

Fig.2c.

MEAN PRESSURES

Fig.2d.

rms PRESSURE FLUCTUATIONS

0169730

3/6

Fig.3a.

4 HOLES OPEN

PRESSURE TRANSDUCER

Fig.3b.

6 HOLES OPEN

Fig.3c.

p/pt

0.30

0.25

0.20

0.8   0.9   M   1.0

MEAN PRESSURES

Fig.3d.

$\bar{p}/q$

0.06

0.04

0.02

0

0   0.8   0.9   M   1.0

rms PRESSURE FLUCTUATIONS

Fig.3e.

$\sqrt{nF(n)}$

0.06

0.04

0.02

0

BUFFET

HEAVY

MODERATE

LIGHT

20   40   f(Hz)

0.005   0.01   fw/u

0169730 4/6

Fig.4a.

4 HOLES OPEN

PRESSURE TRANSDUCER

Fig.4b.

PRESSURE TRANSDUCER

4 HOLES OPEN

Fig.4c.

$p/p_t$ vs MEAN PRESSURES

Fig.4d.

$\bar{p}/q$ vs rms PRESSURE FLUCTUATIONS

*Fig.5.*

50

50

*Fig.7a.*

70

*Fig.7b.*

71

71

*Fig.7d.*

74

73

*Fig.7c.*

72

*Fig.6a.*

62

63

60

61

62

63

*Fig.6b.*

64 65

*Fig.6c.*

67a 66a

66

67

*Fig.6d.*

69

68

*Fig.6e.*

0.02
PERFORATED 0.01

**European Patent Office**

## EUROPEAN SEARCH REPORT

EP  85 30 5239

## DOCUMENTS CONSIDERED TO BE RELEVANT

| Category | Citation of document with indication. where appropriate, of relevant passages | Relevant to claim | CLASSIFICATION OF THE APPLICATION (Int. Cl 4) |
|---|---|---|---|
| X | DE-B-1 216 515  (MEYER)  * Whole document * | 1,2,7, 8 | B 64 C   21/00 B 64 C    1/00 F 15 D    1/00 F 01 D    5/14 E 04 B    1/98 E 04 H   12/00 |
| A | BE-A- 358 128 (SOCIETE DES AVIONS BERNARD) * Page 1, lines 10-14; page 4, lines 4-16,21-33; figures 1-3 * | 1,3,11 | |
| A | FR-A-2 439 157 (ALSTHOM-ATLANTIQUE) * Page 3, lines 1-16; figure 2 * | 1,2,17 | |
| A | GB-A- 736 835 (MASCHINENFABRIK AUGSBURG-NURNBERG) * Page 3, lines 33-51; figure 5 * | 1,2 | TECHNICAL FIELDS SEARCHED (Int. Cl.4) B 64 C F 15 D F 01 D F 02 C F 04 D E 04 B E 04 H E 02 B |

The present search report has been drawn up for all claims

| Place of search | Date of completion of the search | Examiner |
|---|---|---|
| THE HAGUE | 16-10-1985 | ZERI A. |